**Europäisches Patentamt**

**European Patent Office**

**Office européen des brevets**

(19)

(11) Veröffentlichungsnummer: **0 091 970**
**A2**

(12) # EUROPÄISCHE PATENTANMELDUNG

(21) Anmeldenummer: **82102323.1**

(22) Anmeldetag: **20.03.82**

(51) Int. Cl.³: **B 29 D 27/04**

(43) Veröffentlichungstag der Anmeldung: **26.10.83**
**Patentblatt 83/43**

(84) Benannte Vertragsstaaten: **AT CH DE FR GB IT LI NL**

(71) Anmelder: **Flewu AG, Lindenstrasse 15, CH-9006 St. Gallen (CH)**

(72) Erfinder: **Hahn, Ortwin, Prof. Dr.-Ing., Scherfeder Strasse 48, D-4790 Paderborn (DE)**

(74) Vertreter: **Hanewinkel, Lorenz, Dipl.-Phys. et al, Patentanwälte Dr.Ing. Heinz Nickels Dipl.-Phys. Lorenz Hanewinkel Detmolder Strasse 26, D-4800 Bielefeld 1 (DE)**

(54) **Vorrichtung zur gleichzeitigen Herstellung insbesondere unterschiedlicher Formlinge aus gesintertem Polystyrolschaumstoff mit austauschbaren Formwerkzeugen.**

(57) Vorrichtung bei der auf Montageschilden (1, 2) Formwerkzeuge (3, 4) zur Sinterung insbesondere unterschiedlicher Formlinge aus schäumbarem Kunststoff auf in einem Raster angeordneten Montageplätzen angeordnet sind. Für die Betätigung und Versorgung der Formwerkzeuge (3, 4; 3c, 4b) sind auf den Montageplätzen Versorgeranschlüsse (103), Ventile (65a; 66a) und Betätigereinrichtungen (90, 91, 92; 103a) angeordnet, die mit Zuleitungen (61a, 62a, 61b, 62b, 103b) für Medien zum Heizen, Kühlen, Füllen, Sintern und weiteren Installationen zur Steuerung verbunden sind. Den Zuleitungen (61a, 62a, 61b, 62b) sind weitere Ventile vorgeschaltet. Die Betätigungsorgane, z.B. Auswerfer, sind mit Versorgungseinrichtungen, z.B. Düsen für Sintermedien, Ventilfunktionen und Sensoren, integriert ausgeführt; sie werden durch Betätiger (90, 91, 92) mehrstufig betätigt.

Die Ventile (65a, 66a) und Betätiger (90, 103) werden entsprechend den Erfordernissen des einzelnen Formlings vorzugsweise Sensorsignalen gemäß angesteuert. Verfahren dazu sind angegeben.

- 1 -

Vorrichtung mit austauschbaren Formwerkzeugen zur
gleichzeitigen Sinterung insbesondere unterschiedlicher Formlinge aus schäumbarem Kunststoff

Die Erfindung betrifft eine Vorrichtung zur gleichzeitigen
Sinterung insbesondere unterschiedlicher Formlinge aus
schäumbarem Kunststoff, insbesondere Polystyrol, bestehend
aus zwei Montageschilden, die austauschbare Formwerkzeuge
tragen, die jeweils einen Verteiler für Medien enthalten,
der an eine Versorgereinrichtung angeschlossen ist, und/
oder jeweils mindestens ein Betätigungsorgan enthalten,
das an eine Betätigereinrichtung angeschlossen ist.

Es ist bekannt, mehrere Formwerkzeuge zwischen Montageschilden anzubringen, wobei der eine Montageschild feststehend und der andere zum Öffnen und Schließen der Formwerkzeuge verschieblich gelagert und mit einem Antrieb versehen ist. Die einzelnen Formwerkzeuge sind jeweils über
seitliche Anschlüsse mit einer Versorgereinrichtung für
verschiedene Medien wie Dampf, Kühlwasser, Druckluft, Vekuum u. a. verbunden. Weiterhin sind an den Formwerkzeugen
Injektoren und Auswerfer mit Betätigereinrichtungen wie
Druckluft- oder Hydraulikantrieben angebracht, die ebenfalls über Anschlüsse mit einer Versorgereinrichtung und
Steuereinrichtung verbunden sind.

- 2 -

Die Rüstarbeit für die Montage und das Anschließen eines Formwerkzeuges ist deshalb relativ lang.

Bei der Herstellung komplizierter und verschiedenartiger Formlinge kommen Verfahren und Formwerkzeuge zum Einsatz, die in ihrem Zeitablauf relativ genau und vorzugsweise durch Rückmeldung vom Sinterprozeß gesteuert werden müssen, weswegen auf den bekannten Vorrichtungen eine gleichzeitige Herstellung unterschiedlicher Formlinge nur beschränkt möglich ist.

Andererseits werden im allgemeinen Formlinge sehr verschiedener Gestalt, Größe, Wanddicke und Qualität in unterschiedlichen Mengen benötigt, und es ist nicht oder nur unter Qualitäts-, Energie- und Zeitverlust möglich, solche verschiedenartige Formlinge parallel auf einer Vorrichtung herzustellen und den Montageschild jeweils voll bestückt zu betreiben.

Es ist Aufgabe der Erfindung, die genannten Nachteile zu vermeiden, die Rüstarbeit für Anschluß und Montage der Formwerkzeuge auf den Montageschilden zu verringern, eine getrennte, zeit- und energiesparende und qualitätsfördernde Steuerung der Versorgung und Betätigung der montierten Formwerkzeuge zu ermöglichen und andererseits die dazu erforderlichen Formwerkzeuge und die Installation zur Herstellung trockener Formlinge zu vereinfachen.

Die Aufgabe wird dadurch gelöst, daß mindestens eines der Montageschilde eine feste Installation der Versorgereinrichtung und/oder der Betätigereinrichtung mit jeweils mindestens einem Versorgeranschluß und/oder Betätigeranschluß

an auf dem Montageschild in einem Raster angeordneten Montageplätzen für die Formwerkzeuge trägt, und diese jeweils entsprechende Versorgungsanschlüsse und/oder Betätigungsanschlüsse auf der dem Montageschild zugewandten Seite tragen, an denen entsprechend jeweils die Verteiler und/oder das Betätigungsorgan angeschlossen ist.

Die feste Installation der Ventile und Betätigereinrichtungen wird in Funktionsgruppen zusammengefaßt und in Rastern angeordnet. Diese relativ kostenspieligen Bauteile werden nur je einmal pro Rasterfeld benötigt; und die große Zahl der Formwerkzeuge besteht nur aus den Teilwerkzeugen mit Formwänden, Stößeln, Dichtungen usw.. Sie können mit wenigen Handgriffen montiert werden und in beliebiger Kombination auf dem gleichen Montageschild miteinander betrieben werden.

Da die Betätiger- und Versorgeranschlüsse nur in geringer Anzahl entsprechend der Zahl der Rasterfelder benötigt werden, können diese zur Durchführung komplexerer Funktionen ausgelegt werden, wodurch die Formwerkzeuge noch weiter vereinfacht werden. In Verfolgung dieses Erfindungsgedankens werden verschiedene vorteilhafte Ausgestaltungen der Anordnung auf Seiten der festen Installation und des Formwerkzeuges geoffenbart. Außerdem ist es durch die Anwendung des Erfindungsgedankens vorteilhaft möglich, Betätigungs- und Versorgungsfunktionen durch geeignete Ausgestaltung der Verteilung und der Versorgungsorgane miteinander zu verknüpfen. Beispielsweise übernimmt ein Auswerfer, mit einer Bewegung in eine dritte Stellung eine Ventilfunktion. Weiterhin ist ein Auswerferstößel in einfacher Weise mit einer Düsenanordnung als Verteiler des Sintermediums ausgerüstet, wodurch die Materialeigenschaften des Formlings vorteilhaft am Angriffspunkt des Auswerfers beeinflußt werden.

0091970

- 4 -

Weiterhin ist in einem Beispiel dargestellt, daß ein Auswerferstößel mit einem Drucksensor ausgerüstet ist, von dem ein Signal für die Steuerung des Sinterprozesses abgenommen werden kann. Der Auswerferstößel mit dem Sensor kann jeweils an das montierte Werkzeug angeschlossen werden.

Nach einer besonderen Ausgestaltung dient der Auswerferstößel als Versorgungsanschluß. Die Medien werden dabei direkt durch den Schaft zugeführt. Besondere Verteilerbohrungen entfallen dann bei einfachen Formen, und die Medien werden durch die Düsenplatten dem Formhohlraum zugeführt bzw. von dort abgeführt.

Die gezeigten kombinierten Funktionselemente sind auch für sich genommen neu und erfinderisch, da sie bei einer Vereinfachung der Konstruktion gleichzeitig eine Verbesserung der Funktion bewirken.

Eine weitere vorteilhafte Ausgestaltung stellt die Anordnung dar, bei der durch eine Betätigereinrichtung für die Positionierung in mehrere Stellungen mehrere Auswerfer-/Ventilkombinationen parallel betätigt werden, was besonders für die Entformung von komplizierten Formlingen ein Vorteil ist.

Eine weitere Einsparung an Betätigern für die Auswerfer ist in einem anderen Beispiel dargestellt, bei dem alle Auswerfer durch den gemeinsamen Antrieb des Montageschildes zur Formöffnung über einen einfachen Anschlag betätigt werden.

Weitere vorteilhafte Einzelheiten der Konstruktion sind in den Ausführungsbeispielen dargestellt.

- 5 -

Die Beispiele beziehen sich auf Formwerkzeuge mit getrennten Heiz- und Sintermedienversorgungssystemen, da in Verbindung mit diesen, die Vorteile der Erfindung ganz besonders zur Geltung kommen. Es können aber auch einfachere Formwerkzeuge und Montageschilde nach der Erfindung aufgebaut werden.

Die dargestellten Betätigereinrichtungen sind nur funktional und nicht maßstabsgerecht ausgeführt. Sie können durch äquivalente Anordnungen von Antriebselementen ersetzt werden. Ebenso können die dargestellten Detailausführungen in verschiedener Kombination und Variation verwendet werden, ohne daß das Prinzip der Erfindung verlassen wird.

Die dargestellte Vereinfachung, die sich durch die feste Installation ergibt, wird ergänzt durch die nicht in den Figuren gezeichnete umfangreiche Installation von elektrischen, hydraulischen und pneumatischen Steuerleitungen, die zu den Ventilen und Zylindern der Betätiger führen, und die elektromechanischen Steuerventile für die Hydraulik- und Pneumatikzuleitungen.

Die Installation auf dem Montageschild beinhaltet vorzugsweise auch die nicht dargestellten Verteiler für die Versorgungsmedien auf die reihenweise angeordneten Ventile und Anschlüsse. Von den Verteilern gehen Schlauch- und Kabelverbindungen zu den Dampf-, Druckluft-, Vakuum-, Kühlwasser- und Steueranlagen. Die Installation ist in bekannter Weise ausgeführt.

Die Verbindungen durch den Montageschild zu den Teilwerkzeugen können verschiedenartig ausgebildet sein. Bevorzugte Lösungen von abgedichteten Durchführungen sind in den Beispielen dargestellt. Insbesondere ist dabei die Schwierigkeit berücksichtigt, die durch die thermische Wechselbeanspruchung bei der wechselnden Heizung und Kühlung des Formwerkzeuges mit jedem Arbeitszyklus entsteht. Der Montageschild wird aus Gründen der Stabilität vorzugsweise aus Stahl hergestellt, und die Formwerkzeuge sind aus preislichen Gründen und wegen besserer thermischer Leitfähigkeit und geringerer Wärmekapazität aus Leichtmetall gefertigt. Hierdurch und wegen der unterschiedlichen Temperaturen, entstehen zwischen dem Montageschild und dem Formwerkzeug wechselnde Unterschiede in der Ausdehnung. Deshalb und aus Gründen einfacher Montage sind Durchführungen gezeigt, die diesen Bedingungen entsprechend ausgeführt sind.

Nach besonderen Ausführungen der Erfindung wird die Abdichtung der Durchführungen bei wechselnder unterschiedlicher Ausdehnung des Montageschildes gegen das Formwerkzeug und die einfache Montage der beiden Teile zueinander dadurch gelöst, daß entweder eine Ringdichtung für jede Durchführung vorgesehen oder eine elastische Dichtung flächig zwischen beide Teile eingefügt wird. Durch diese wird weiterhin vorteilhaft bewirkt, daß das Formwerkzeug sich bei wechselnder Temperatur nicht durch Verspannung verformt. Weiterhin wird durch die Dichtung vorteilhaft eine thermische Isolierung zwischen beiden Teilen geschaffen, die einen unerwünschten Temperaturanstieg im Montageschild und der Installation vermeidet, und außerdem wird der Energieverbrauch der Gesamtanlage verringert.

In weiterer Verfolgung dieses Teilaspektes der Erfindung ist weiterhin dargestellt, daß das Formwerkzeug an der Seite, auf der sich die Durchführungen befinden, und zusätzlich an den Seitenwänden innen mit einer Wärmeisolierung ausgekleidet ist. Ebenso sind die Schäfte der Auswerfer und das Injektorrohr wärmeisolierend und korrosionsschützend überzogen. Dadurch wird einerseits die thermische Wechselbeanspruchung und die ständige Verschiebung der Abschnitte der Durchführungen zueinander verringert, die Ausdehnung der Stempel und die Wärmeableitung an die Betätiger eingeschränkt und der Energieverlust der Gesamtanlage verringert, so daß andererseits die Formwand schneller und gleichmäßiger geheizt und gekühlt wird. Dies führt weiterhin dazu, daß insbesondere während der Inbetriebnahme nach einer Arbeitspause kein unterschiedliches Anfahrverhalten durch erhöhte Wärmeaufnahme der Umgebung des Formwerkzeuges aus dem Verteiler und Heizraum entsteht, und benachbarte Formwerkzeuge sich gegenseitig nicht beeinflussen, wenn diese verschiedene Heiz-/ Kühlzyklen durchfahren.

Die Formwerkzeuge können entsprechend der Größe der herzustellenden Formlinge ein oder mehrere Rasterfelder belegen. Lediglich die Anschlüsse, Durchführungen und Befestigungen müssen jeweils denjenigen im Montageschild entsprechen.

Für den störungslosen Betrieb der Vorrichtung ist es vorteilhaft, wenn die Trennebene aller Formwerkzeuge die gleiche ist, daß die fertigen Formlinge von anderen Formwerkzeugen beim Herausfallen nach dem Ausformen nicht behindert werden. Da andererseits die Formwerkzeuge für kleine Formlinge nicht unnötig groß sein sollen, ist eine vorteilhafte Lösung

- 8 -

dargestellt, die in der Einfügung von Zwischenstücken in der Größe eines oder mehrerer Rasterfelder liegt. Diese sind zweckentsprechend mit Durchführungen versehen und beinhalten Führungen für die Betätigungsorgane und/oder für die Medienzu- und -abführungen.

Die Zwischenstücke sind unabhängig vom speziellen Formwerkzeug ausgestaltet und können in standardisierter Ausführung hergestellt und bevorratet werden.

Bei der Herstellung der Formwerkzeuge wird in vielen Fällen vorteilhaft die Formwand getrennt von den Seitenwänden und der Rückwand bearbeitet und diese dann zusammengefügt. Hierdurch ergibt sich die alternative Möglichkeit, nicht das ganze Formwerkzeug jeweils auszutauschen, sondern nur die Formwand. Hierdurch wird die Erstellung neuer Formwerkzeuge noch weiter vereinfacht und verbilligt. Sofern nur Formwerkzeuge bestimmter Größe verwandt werden, werden die Seitenwände der Formwerkzeuge zweckmäßig in den Montageschild integriert und mit diesem einteilig hergestellt; die eigentlichen Formwerkzeuge sind dann auf die Formwand beschränkt, alles Übrige ist in den Montageschild integriert und als Grundlage des Baukastensystems angeordnet.

Es ist somit möglich, auch unterschiedlichste Formlinge, z. B. für einen Satz Verpackungsteile und weitere andere Teile, gleichzeitig herzustellen. Eine Umrüstung auf andere Formwerkzeuge erfolgt mit wenigen Handgriffen. Die Steuerung wird zentral auf die dem einzelnen Formling entsprechenden Bedingungen eingestellt. Die Taktzeit der Entformung richtet sich jeweils nach dem Formling, der die längste Zykluszeit benötigt. Die Vorrichtung und die zugehörige Versorger- und Steueranlage wird dadurch weitestgehend ausgenutzt, und es entstehen praktisch keine Verlustzeiten.

Die zentrale Installation der Versorgeranschlüsse und -ventile auf den Montageschilden wird entsprechend einer Weiterentwicklung der Erfindung in der Weise vereinfacht und dadurch eine erhebliche Aufwandseinsparung erzielt, daß die Verteiler in den Formwerkzeugen jeweils über einen Versorgeranschluß mit einer an alle Rasterplätze oder jeweils eine Gruppe von Rasterplätzen eines Montageschildes jeweils geführte Zuleitung verbunden werden, der über zentrale Ventile die verschiedenen Medien: Dampf oder Kühlwasser bzw. Kühl-, Druckluft, Kühl-, Druckgas, Vakuum, Entsorgung oder Dampf oder auch Härter oder Farbnebel jeweils zeitlich gesteuert zugeführt werden, und daß zwischen die Zuleitung und die Verteiler, die über Düsen mit dem Formhohlraum in Verbindung stehen, jeweils ein einzelnes steuerbares Ventil geschaltet ist, das insbesondere die Zuführung von Dampf für die Sinterung den Erfordernissen des einzelnen Formlings angepaßt schaltet. Auf diese Weise ist es möglich, mit relativ geringem Aufwand weitgehend trockene Formlinge in kurzer Zeit herzustellen.

Das Verfahren zur Steuerung ist vorteilhaft so ausgestaltet, daß die Steuerung der zentralen Ventile entsprechend dem längsten Zeitbedarf für die Medienzufuhr erfolgt und die einzelnen Betätiger und Ventile der Formwerkzeuge den Erfordernissen des Formlings entsprechend betätigt bzw. gesteuert werden. Die Steueranlage benötigt demgemäß weniger Aufwand. In den hier gemachten Ausführungen ist die Bezeichnung Versorgung die Entsorgung beinhaltend benutzt. Unter dem Begriff Montageschild ist hier sowohl der feststehende Schild als der i. a. als Maschinenschild bezeichnete verschiebliche Schild bezeichnet.

Als Betätigungsorgane sind i. f. Auswerfer und Ventilschieber gezeigt; es können aber auch Formschieber, Drehbetätigungsmittel usw. in entsprechender Weise benutzt werden.

In den Figuren 1 bis 10 sind Einzelheiten der konstruktiven Ausgestaltung der Erfindung dargestellt.

Fig. 1     zeigt eine Übersicht über die gesamte Vorrichtung; teilweise schematisch;

Fig. 2     zeigt die Vorrichtung bezüglich eines Formwerkzeuges im Schnitt und die Kombination eines Ventils mit einem Auswerfer und einer Düsenplatte;

Fig. 3     zeigt einen Schnitt eines Formwerkzeuges mit Zwischenstück;

Fig. 4     zeigt Einzelheiten des kombinierten Auswerfers im Schnitt in Kombination mit einem Ventil und einer Düsenplatte;

Fig. 5     zeigt die Kombination eines Auswerfers mit einer Düsenplatte;

Fig. 6     zeigt eine Ventilanordnung;

Fig. 7     zeigt die Kombination eines Auswerfers mit einer Ventilanordnung und einem Druckaufnehmer;

Fig. 8     zeigt die Kombination eines Auswerfers mit einem Druckaufnehmer;

Fig. 9     zeigt eine Betätigervorrichtung mit Anschlag des Schaftes eines Betätigers     und

Fig. 10    zeigt ein Installationsschema der Vorrichtung.

**Fig. 11    zeigt eine Auswerfer-/Ventilanordnung und einen geschlossenen Medienkanal.**

- 11 -

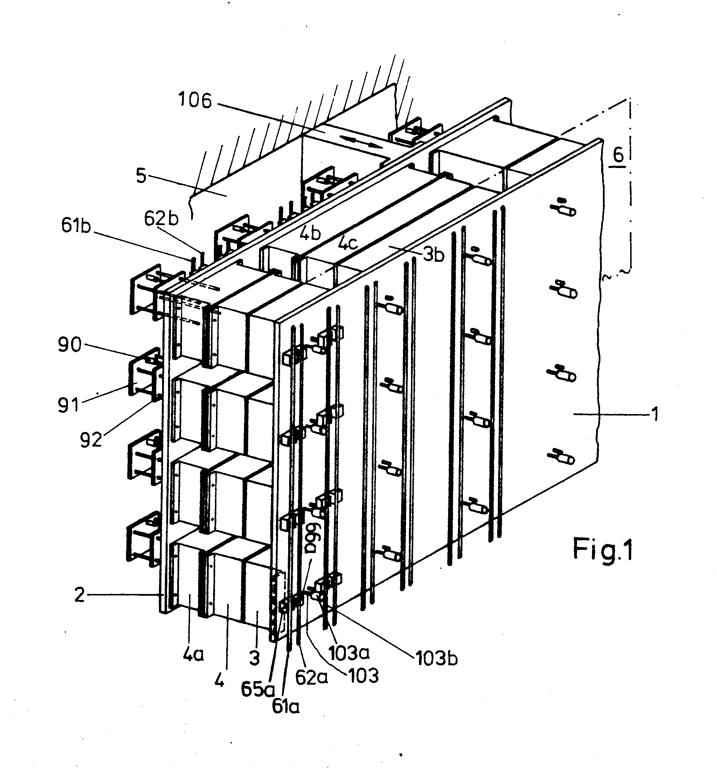

Fig. 1 zeigt perspektivisch eine Vorrichtung nach der Erfindung, wobei die wesentlichen Teile dargestellt sind und die bekannten Verstärkungen und Lagerungen der Montageschilde 1, 2 nicht gezeigt sind. Lediglich schematisch ist der Öffnungs-/Schließmotor des Montageschildes 2 gezeigt. Das Montageschild 1 ist fest verankert. Zwischen den Montageschilden 1, 2 sind Formwerkzeuge 3, 4; 3b, 4c verschiedener Normgrößen angeordnet. Auf den anderen Seiten der Montageschilde 1, 2 sind Installationen von Versorgereinrichtungen und Betätigereinrichtungen dargestellt. Im einzelnen sind dies Zuleitungen 61a für Preßluft, 62a für Dampf, 63a für Kühlung, 64a für Vakuum, 103b für Granulat und entsprechende Zuführungen auf dem Montageschild 2, die jeweils mit der entsprechenden Bezugsnummer und b gekennzeichnet sind, soweit diese sichtbar sind. Die Verteiler auf die Zuführungsrohre sind nicht dargestellt. Von den Zuleitungen gehen jeweils über Ventile 65a, 66a Versorgeranschlüsse durch den Montageschild in die Formwerkzeuge. Diese Ventile sind in Rasterabständen in beiden Richtungen über die Schilde verteilt. Weiterhin befinden sich zwischen der Granulatzuführung 103b und dem Montageschild 1 Injektoren 103a, die in das Formwerkzeug 3 führen. Auf dem Montageschild 2 sind weiterhin Betätigereinrichtungen gezeigt mit Hydraulikzylinder 90, Lagerplatte 91, Führungsplatte 92, von denen Betätiger in die Formwerkzeuge 4, 4c geführt sind. Auch diese Betätigereinrichtungen sind im Raster über die gesamte Vorrichtung verteilt angebracht. Zwischen dem Formwerkzeug 4 und dem Montageschild 2 ist ein Zwischenstück 4a eingeschaltet. Die Öffnungsebene 6 der beiden Formwerkzeuge 3, 4 ist durch dieses Zwischenstück für alle Formwerkzeuge einheitlich gelegt.

0091970

- 12 -

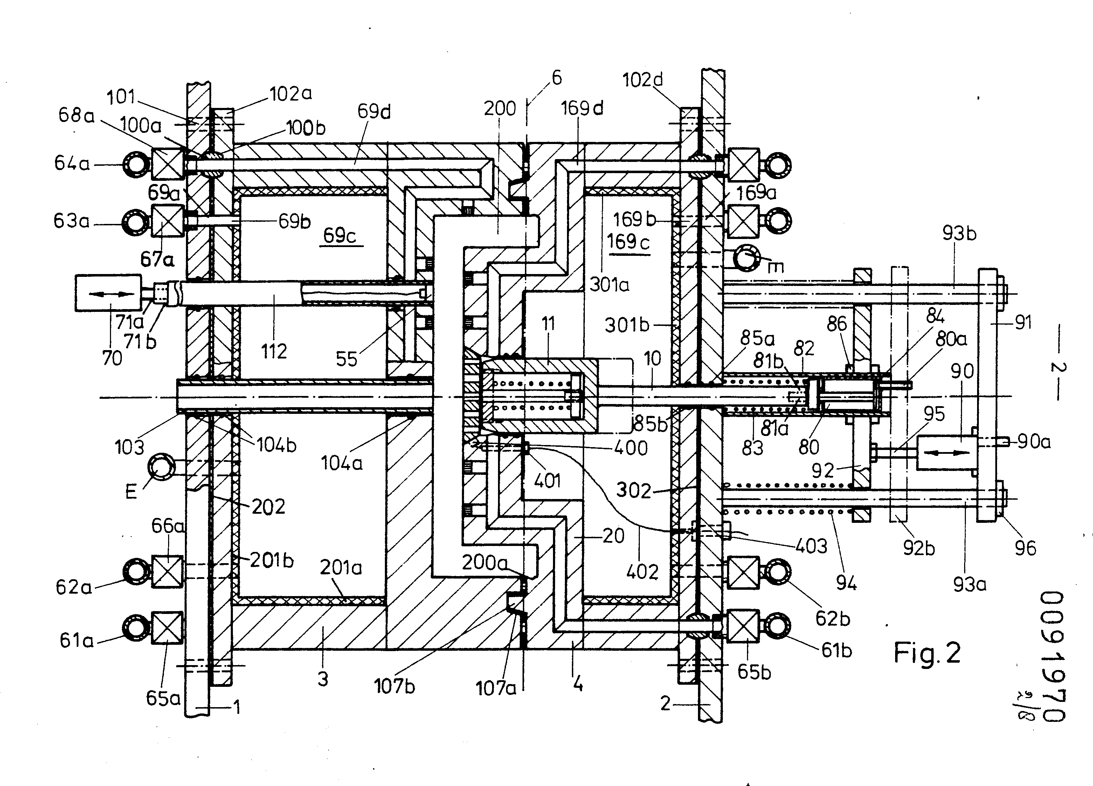

Einzelheiten über die Konstruktion der Formwerkzeuge werden anhand der Fig. 2 beschrieben. Das Teilwerkzeug 3 liegt auf der Injektorseite, und durch das Teilwerkzeug 4 ist ein Auswerfer 11 geführt. In anderen Ausführungsformen könnten auch auf beiden Seiten Injektoren oder Auswerfer angeordnet sein. So ist auf der Injektorseite ein weiterer Auswerfer in anderer Ausführungsform 112 dargestellt. Innerhalb der Formwerkzeuge 3, 4 befindet sich ein Verteilerraum 69c, 169c für das Heiz- und Kühlmedium, der über die Verbindungsbohrung 69b, 169b, die den Versorgungsanschluß darstellt, mit dem Versorgeranschluß 69a, 169a in dem Montageschild 1, 2 in Verbindung. An den Versorgeranschluß schließt sich das Ventil 67a an, welches die Zuführung des Kühlmediums steuert. Entsprechend ist ein Versorgungsanschluß für das Heizmedium zwischen dem Ventil 66a und dem Verteilerraum 69c angebracht. Selbstverständlich könnten auch die Ventile 66a und 67a mit ihren Ausgängen zusammengeführt werden und auf einen Versorgeranschluß gelegt sein. Die Formwand 20, 21 ist mit Bohrungen 22 durchzogen, von denen aus Düsen 211 mit Dampf zum Sintern oder Druckluft zum Kühlen oder Ausstoßen des Formlings oder mit Vakuum zum Ansaugen des Granulats versorgt werden, die sie an den Formhohlraum 200 weiterleiten. Diese Verteilerbohrungen sind über den Verteilerkanal 69d ebenfalls mit einem Versorgungsanschluß über eine Dichtung 100a durch den Montageschild 1 zu einem Ventil 68a geführt. Dieses Ventil 68a ist eingangsseitig mit einer Vakuumleitung 64a oder der Außenluft E verbunden. So erfolgt beim Füllen eine gerichtete Strömung der Injektorluft durch die Verteilerbohrungen zum Vakuum oder nach außen. Entsprechend ist die Druckluftleitung 61a ebenfalls über eine Verteilerbohrung mit den Düsen verbunden. Auch die Ventile 65a und 68a können in einer anderen Anordnung vor der Durchführung durch den Montageschild 1 miteinander verbunden werden. Als alternative Lösung zu einzelnen Versorgungsanschlüssen mit ihren Dichtungen 100a sind die weiteren Anschlüsse in anderer Ausführung gezeigt.

Zwischen dem Teilwerkzeug 3 und dem Montageschild 1 ist eine Isolierung 202 aus Kunststoff angeordnet, so daß unterschiedliche Ausdehnungen des vorzugsweise aus Aluminium bestehenden Formwerkzeuges 3 gegenüber dem stählernen Montageschild 1 ausgeglichen werden können, ohne daß Deformationen der Formwerkzeuge 3 oder des Schildes 1 auftreten. Außerdem verringert die Isolierung 202 einen schnellen Wärmeübergang vom Teilwerkzeug 3 zum Montageschild 1. Die Fixierung des Formwerkzeuges 3 an dem Montageschild 1 geschieht über Verbindungsbolzen in den Bohrungen 101, die ausreichend Spiel in der Bohrung besitzen. Der Verteilerraum 69c für den Dampf ist mit einer weiteren Isolierung 201a, b an den Seitenwänden und der Rückwand zum Montageschild 1 hin ausgekleidet, um zusätzlich Wärmeverluste zu verhindern. Der Injektor 103a ist an das Injektorrohr 103 angeschlossen, welches bis in den Formhohlraum 200 reicht. Es ist durch die Formwand 20, 21 und durch den Montageschild 1 mit Dichtungen 104a, 104b durchgeführt, damit das Heiz- und Kühlmedium nicht unkontrolliert in den Formhohlraum und nach außen austritt. Ebenso ist der Auswerfer 112 an seinen Durchführungen abgedichtet. Der Betätiger 70 des Auswerfers 112 und der Injektor 103a ist in bekannter Weise ausgeführt und deshalb nur schematisch dargestellt. Der Auswerfer 112 ist mit dem Betätiger 70 über eine trennbare Verbindung 71a, b verbunden, die bei der Montage des Formwerkzeuges 3 auf dem Montageschild 1 zusammengeschraubt oder in anderer Weise, z. B. mit einem Schnellverschluß, zusammengekoppelt wird.

- 14 -

Das Injektorrohr 103 wird ebenfalls mit dem Injektor 103a über eine Schraub- oder Schnellverschlußverbindung zusammengeschlossen. Die Verbindungen des Injektorrohres 103 und des Auswerfers 112 liegen zweckmäßig in definierter Lage zu dem Montageschild 1, so daß alle Formwerkzeuge mit einheitlich langen Injektorrohr- und Auswerferenden durch das Montageschild 1 hindurchragen.

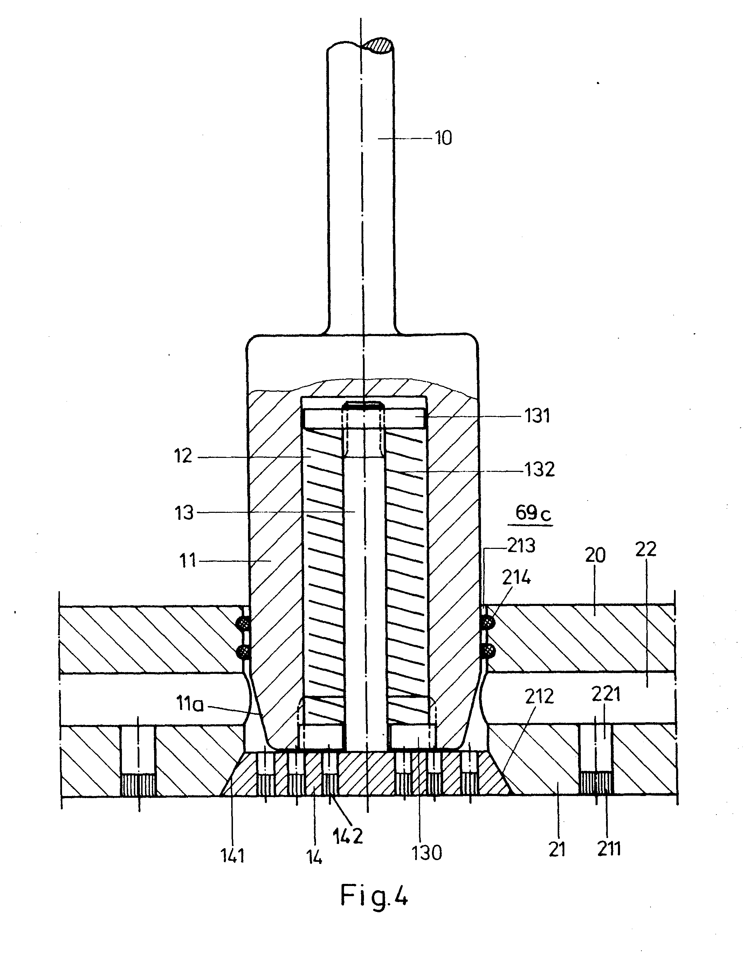

In dem Formwerkzeug 4 ist ein speziell ausgestalteter Auswerfer 11 dargestellt, der im einzelnen nochmals in Fig. 4 gezeigt wird. Zur Betätigung dieses Auswerfers 11 dient eine Betätigervorrichtung 80, 90, die auf dem Montageschild 2 in schematischer Form gezeigt ist. Sie besteht aus zwei Betätigern 80, 90, die zwei verschiedene Bewegungen des Auswerfers 11 bewirken. Der Betätiger 80 ist ein Druckluft- oder Hydraulikzylinder, der über den Stutzen 80a versorgt wird. Sein Kolben wirkt gegen die Federkraft der Feder 83 und schiebt den Stößel 10 in Bewegungsrichtung des Auswurfs des Formlings, der im Formhohlraum 200 gesintert wird. Der Auswerfer 11 drückt dabei die Düsenplatte 14 gegen den Formling und schiebt diesen aus der Form heraus. Der zweite Betätiger 90 ist ebenfalls ein Preßluft- oder Hydraulikzylinder, der über den Anschluß 90a versorgt wird. Er lagert am Montageschild 2 über Führungsbolzen 93a und 93b an der Lagerplatte 91. Sein Kolben wirkt über Stange 95 auf die verschieblich in den Führungsbolzen 93a, b gelagerte Führungsplatte 92, auf der der Hydraulikzylinder 80 befestigt ist. Durch Betätigung des Zylinders 90 wird die Führungsplatte 92 und damit der gesamte Betätiger 80 und somit auch der Schaft 10 des Auswerfers 11 aus der strichpunktierten Lage 92b in Lage 92 bewegt. Der Auswerfer 11 ist in strichpunktierter Lage aus seiner Dichtung 214 in der Formwand 20 ausgetreten, wodurch das Heizmedium Dampf aus dem Verteilerraum 169c in die Verteilerbohrung 22, 169d einströmen kann und durch die Düsen 211 und durch die Düsenplatte 14 in den Formhohlraum 200 einströmen kann. Nach Abschluß des Sintervorganges wird der Betätiger 90 beaufschlagt, und er schließt das durch den Auswerfer 11 und die Dichtung 214 gebildete Ventil. Die Lage des Auswerfers 11 wird bestimmt durch den Anschlag, den das Rohr 82 für die Führungsplatte 92 an dem Montageschild 2 bildet.

Die Addition der zwei Bewegungen, nämlich der Bewegung des Auswerfers 11 zum Schließen des von ihm mit der Dichtung 214 gebildeten Ventils und der Bewegung zum Auswerfen, kann auch durch andere Anordnungen von Betätigern oder durch einen Betätiger der in verschiedene Stellungen gesteuert werden kann, in ähnlicher Weise erfolgen.

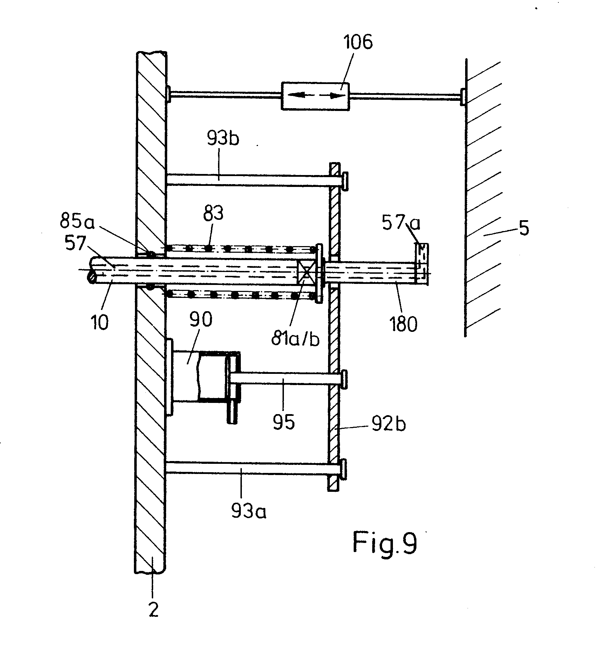

In Fig. 9 ist gezeigt, wie das Betätigen des Auswerfvorganges durch den Antrieb des Montageschildes erfolgt, wenn der Schaft 10 mit der Schaftverlängerung 180 bei der Öffnungsbewegung des Montageschildes 2, die durch den Motor 106 bewirkt wird, von einem Anschlag 5 festgehalten wird. Auch der Schaft 10 des Auswerfers 11 wird durch eine Schraub- oder Schnellverbindung in einem definierten Abstand von dem Montageschild 2 mit der Betätigervorrichtung 80 oder der Schaftverlängerung 180 verbunden. Der Schaft 10 ist im Montageschild 2 mit einer Dichtung 85a oder in der Rückwand des Formwerkzeuges 4 mit Dichtung 85b gelagert.

In Fig. 4 ist im einzelnen zu erkennen, wie der Auswerfer 11 ausgestaltet ist. An seinem, dem Formhohlraum 200 zugewandten

- 16 -

Ende ist er konisch verjüngt, damit er bei dem Eintreten in die Ventilbohrung 213 in der Formwand 20 sich zentriert. Es ist auch möglich, den Auswerfer 11 zylindrisch auszuführen und Aussparungen vorzusehen, durch die das Sintermedium in die Bohrung 22 bei geöffneter Ventilstellung eintreten kann. Der Auswerfer 11 ist innen zylindrisch mit einer Ausnehmung 12 versehen, in der ein Bolzen 13 geführt gelagert ist, an dem sich zum Formhohlraum hin die Düsenplatte 14 befindet. Dieser Bolzen wird über die Feder 132 kraftschlüssig in die Formwand 21 hineingezogen. Durch den Kegelsitz 212 und die konusförmige Ausbildung der Seitenfläche 141 der Düsenplatte 14 wird diese exakt gelagert. Als Widerlager für die Feder 132 dient einerseits die auf den Bolzen 13 geschraubte Mutter 131, die gleichzeitig in der zylindrischen Ausnehmung 12 als Führungsmittel dient, und andererseits die mit Außengewinde versehene Scheibe 130, die innen eine Führung für den Bolzen 13 bildet und die Federanordnung in dem Auswerfer hält.

Bei geöffnetem Ventil tritt der Dampf bevorzugt durch die Öffnungen in der Düsenplatte 14 aus, wodurch der Formling an dieser Stelle verstärkt gesintert wird. Dies stellt einen besonderen Vorteil bei der anschließenden Beanspruchung durch den Auswerfvorgang dar. Weiterhin ergibt sich durch den exakten Kegelsitz der Düsenplatte 14 ein glatter Abschluß mit der Formwand 21, und Toleranzen in der Lage des Auswerfers gegenüber der Formwand 21 bleiben weitgehend unkritisch, was die Montage des Schaftes 10 relativ zu der Betätigervorrichtung 80, 90 vereinfacht.

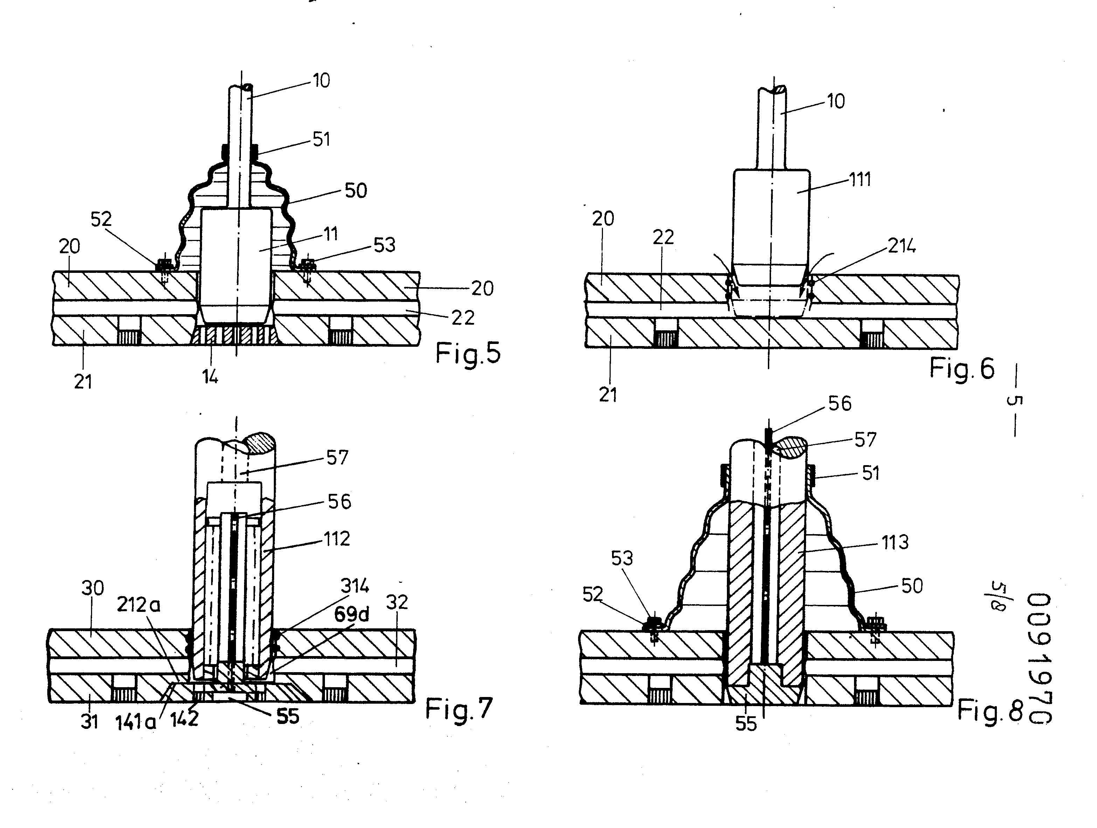

Fig. 5 zeigt eine ähnliche Gestaltung des Auswerfers, wobei auf die Ventilwirkung verzichtet ist, weil eine anderweitige Zuführung des Sintermediums bereits vorgesehen ist. In diesem Fall kann eine feste Abdichtung 50 zwischen dem Schaft 10 und der Formwand 20 gegen die Bohrung 22 vorgesehen werden. Die Dichtung ist in bekannter Weise balgenförmig ausgeführt und mit Schelle 51 am Schaft 10 befestigt und mit Ring 52 an der Formwand 20 angeschraubt.

Fig. 6 zeigt eine Anordnung eines Ventils, das durch den Schaft 111 mit der Dichtung 214 in der Formwand 20 gebildet wird. Es ist in diesem Fall vergleichsweise zur Konstruktion der Fig. 4 auf die Auswerferposition verzichtet worden, weil es sich z. B. um einen ebenen Formling handelt, der keinen Auswerfer benötigt. Eine Zuführung von Dampf zu der Verteilerbohrung 22 durch einen Versorgeranschluß erübrigt sich, weil der Dampf über dieses Ventil aus Dichtung 214 und Schaft 111 aus dem Verteilerraum gesteuert einströmen kann.

Fig. 7 zeigt eine weitere Auswerferkonstruktion, die ebenfalls mit der Ventilfunktion verknüpft ist. Der Auswerfer 112 bildet mit der Dichtung 314 in der Formwand 30 das Ventil für das Sintermedium, das über die Bohrung 32 und die daran angeschlossenen Düsen in den Formhohlraum 200 einströmt. Der Auswerfer 112 trägt auf seiner Stirnseite einen Drucksensor 55, durch den festgestellt wird, wie weit der Sintervorgang fortgeschritten ist; denn bei fortgeschrittenem Sintervorgang entsteht ein überhöhter Druck im Formhohlraum 200 und den angeschlossenen Verteilern. Das Signal des Drucksensors 55 wird über die Zuleitung 56 in einer Innenbohrung 57 des Auswerfers 112 durch den Montageschild zu der Steuereinrichtung geführt.

Im Übrigen entspricht die Konstruktion der Halterung des Drucksensors 55 der Anordnung der Düsenplatte 14. Zusätzlich ist zur Deckfläche des Kegels 141a ein ebenes Auflager 121a in der Formwand 31 vorgesehen.

In bevorzugter Ausführung ist die Halterung des Drucksensors auch mit Düsen 142 bestückt. Statt des Drucksensors kann auch ein Temperatursensor vorgesehen werden oder können Sensoren eingebaut werden für Druck und Temperatur.

Je nach den Erfordernissen des Formlings kann es ausreichend sein, daß nur die Düsen 142 in der Düsenplatte für die Zuführung des Sintermediums vorhanden sind; es können dann die Bohrungen 22, 32 entfallen. Der Verteiler wird durch den Raum zwischen Düsenplatte 14 und das Betätigungsorgan 11 gebildet. Weitere Medien, z. B. Injektorluft, die dem Formhohlraum zugeführt oder von diesem abgeführt werden, werden besonders vorteilhaft über die Innenbohrung 57 im Auswerfer 112 geleitet. Die Formwand kann dann sehr dünn ausgeführt werden.

In Fig. 9 ist gezeigt, wie die Innenbohrung des Schaftes 10 durch Anschluß 57a herausgeführt ist. Dieser ist z. B. mit einer Zuleitung über einen elastischen Schlauchverbinder gekoppelt.

Fig. 8 zeigt eine entsprechende Anordnung eines Auswerfers 113 mit Druckaufnehmer 55 mit einer ständig geschlossenen Dichtung 50. Selbstverständlich können auch andere Kombinationen der gezeigten Ausführungsformen der Betätigungs- und Versorgungseinrichtungen gewählt werden; diese liegen im Rahmen der Erfindung.

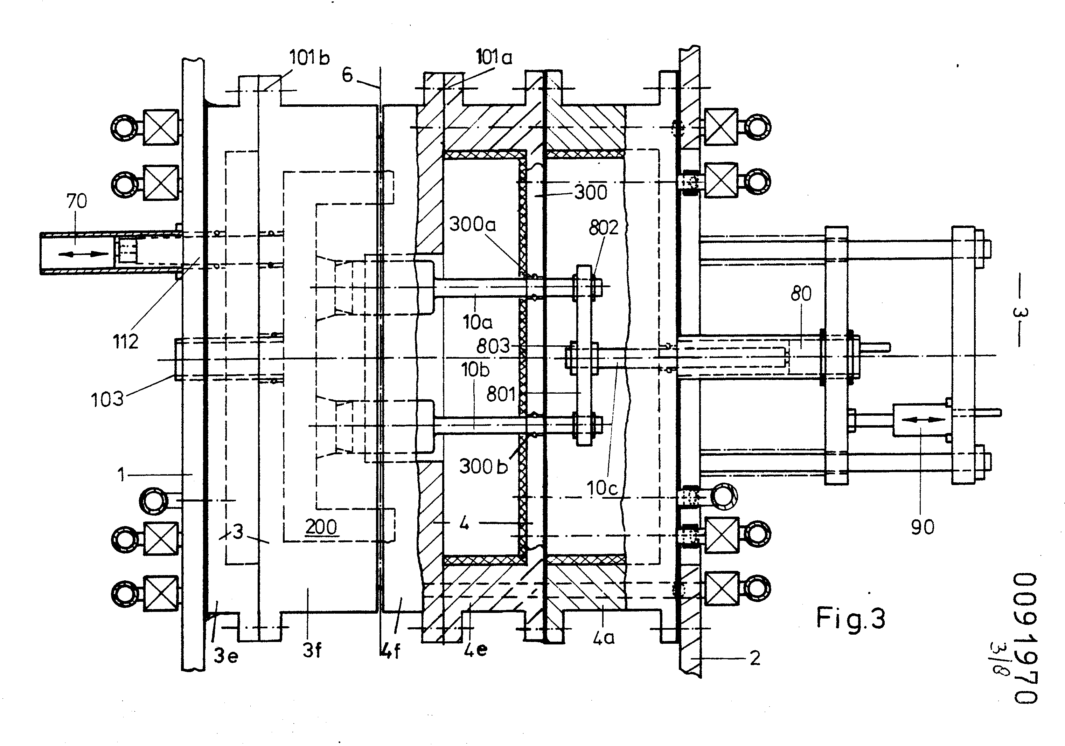

In Fig. 3 ist eine Anordnung gezeigt, bei der mehrere Auswerfer über einen gemeinsamen Schaft 10c von einer Betätigervorrichtung 80, 90 parallel bewegt werden. An dem Schaft
10c befindet sich ein Verteilerarm 801, an dem die Schäfte
10a, b befestigt sind. Diese Befestigung ist so ausgeführt,
daß ein Verkanten des Verteilerarmes bei ungleichem Widerstand des Formlings gegen die beiden Auswerfer vermieden wird.
Auch die Befestigung des Schaftes 10c in dem Verteilerarm
801 ist deshalb so ausgeführt, daß eine Verkantung weitgehend ausgeschlossen ist. Zusätzlich sind die Schäfte 10a,
10b in Bohrungen 300a, 300b parallel geführt, um eine Verkantung zu vermeiden, die zur Zerstörung des Formlings führen könnte. Die Führungsbohrungen 300a, 300b befinden sich
in der Wand 300, die zwischen dem Formwerkzeug 4 und dem
Zwischenstück 4a liegt. Durch dieses Zwischenstück 4a wird
die Trennebene 6, die zwischen den Formwerkzeugen 3 und 4
liegt, auf die gleiche Höhe gebracht wie sie bei weiteren
Formwerkzeugen, die sich in der Vorrichtung befinden, eingerichtet ist. Die beiden Auswerfer an den Schäften 10a und 10b
können z. B. von der Art,wie in Fig. 4 und Fig. 7 dargestellt,sein. Wenn grundsätzlich Auswerfer mit einer Düsenplatte 14 bevorzugt werden, ist es vorteilhaft, einen
Temperatur- und/oder Drucksensor 400 fest in der Formwand
zu installieren. Ein Beispiel hierfür ist in Fig. 2 gegeben,
wo ein Drucksensor 400 neben der Düsenplatte 14 angeordnet
ist und die Zuleitung über Durchführung 401 und 403 durch
die Formwand 20 und den Montageschild 2 zum Installationsbereich geführt ist.

Ein Zwischenstück, wie es bei Formwerkzeug 4 vorgesehen ist,
kann entsprechend auch für Formwerkzeug 3 auf dem anderen
Montageschild eingefügt werden, wenn das Formwerkzeug nur
flach zu sein braucht. Die Verkleinerung des Formwerkzeuges auf eine Größe, die den Gegebenheiten des Formlings und den Festigkeitsanforderungen genügt, führt zu kürzeren Zykluszeiten für Heizen und Kühlen und somit auch zu Energieeinsparung.

Die Zwischenstücke können für beide Seiten gleich sein, wenn die Anschlüsse symmetrisch für die Formwerkzeuge gelegt sind. Die verschiedenen Durchmesser des Injektorrohres und der Betätiger können in den Durchführungen durch entsprechende Dichtungseinsätze ausgeglichen werden.

Das Formwerkzeug 4 besteht aus Herstellungsgründen aus der Formwand 4f und der Verteilerkammer 4e. Im Falle, daß ähnliche Formlinge hergestellt werden sollen, kann auch die Verteilerkammer 4e beim Umrüsten montiert bleiben. Es wird dann jeweils nur die Formwand 4f ausgetauscht und mit den Verbindungsmitteln 101a an der Seitenwand der Verteilerkammer 4e befestigt.

Eine andere vorteilhafte Ausgestaltung für die Herstellung gleichartiger Formlinge besteht in der Integration der Verteilerkammer 3e mit dem Montageschild 1. Hierbei wird jeweils nur die Formwand 3f mit Verbindungsmitteln 101b an den Montageschild 1 mit der Verteilerkammer 3e befestigt. Das Formwerkzeug wird dadurch noch weiter vereinfacht.

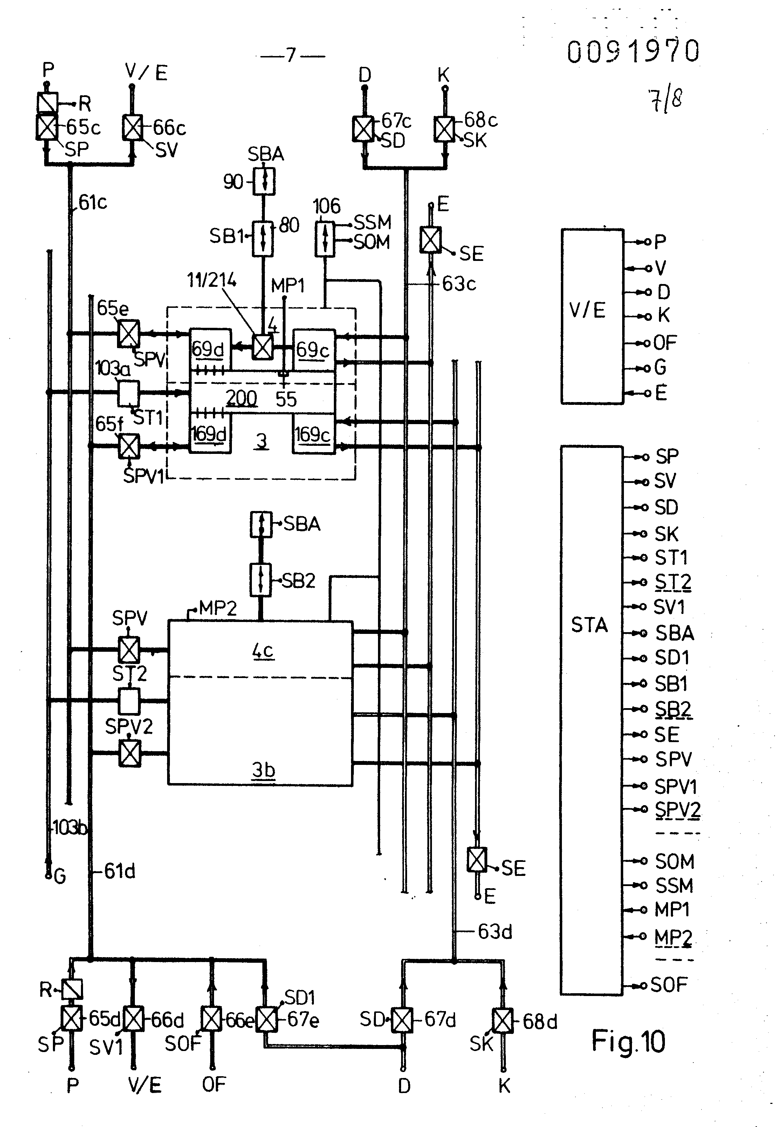

Fig. 10 zeigt eine Übersicht über eine Installation auf den Montageschilden 1, 2, bei der nicht für jeden Rasterplatz ein vollständiger Satz Ventile vorgesehen ist, sondern die Ventile und Zuführungen, soweit dies zweckmäßig ist, völlig zentral oder in Gruppen zusammengefaßt sind. So werden die Druckluft P und Vakuum V oder Entsorgung E über die Ventile 65c, 66c auf eine gemeinsame Zuleitung 61c zusammengeführt, da diese nie gleichzeitig einem Formwerkzeug zugeführt werden. Es befindet sich zwischen der Zuleitung 61c und dem Verteiler 69d der verschiedenen Formwerkzeuge 4, 4c jeweils ein Ventil 65e, das jeweils eine Entkopplung der Verteiler der Formwerkzeuge, insbesondere bei der Dampfzuführung, zum Formhohlraum 200 sicherstellt.

Ebenso sind Dampf D und Kühlmedium K über Ventile 67c, 68c zentral auf die Zuleitung 63c geführt und auf die Verteiler 69c geleitet. Auch die Entsorgung der Verteiler 69c erfolgt über Ventile auf Leitung E zentral.

Eine entsprechende Ventilanordnung mit entsprechenden Bezugszeichen 65d, 66d, 67d, 68d befindet sich auf dem zweiten Montageschild. Es ist auch möglich, auf die zweite Ventilanordnung zu verzichten und die Zuleitungen auf dem zweiten Montageschild mit denen auf dem ersten Montageschild zu verbinden.

Ein vollständiger Arbeitszyklus der Vorrichtung zur Herstellung eines Satzes von Formlingen wird je Formwerkzeug durch Signale gesteuert, die jeweils den Ventilen, dem Injektor 103a, dem Betätiger 80 und dem Schließmotor 106 von einer Steueranordnung STA zugeführt werden.

Im einzelnen wird von der Steueranordnung STA eine Signalfolge erzeugt, die für Heizung und Kühlung auf das Formwerkzeug mit dem größten Heiz- bzw. Kühlzeitbedarf der Gruppe eingestellt ist. Die Ventile 11/214, die für die Dampfzufuhr zur Sinterung dienen, werden für jedes Formwerk-

- 22 -

zeug individuell durch den Betätiger 80 mit Signalen S 131, S 132 usw. gesteuert. Dazu dient jeweils das Meldesignal MP 1, das den Druck jeweils in den Formhohlräumen 200 bzw. den damit verbundenen Verteilern und Ver-/Entsorgungen angibt. Ebenso werden die Injektoren 103a, abhängig von dem Volumen und der Befüllung des Formhohlraumes 200, mit den Signalen SI1, SI2 usw. jeweils entsprechend gesteuert.

Zu Beginn eines Zyklus werden die Formen durch den Schließmotor 106 mit Signal SSM geschlossen. Gleichzeitig sind bereits die Ventile 67c, d für den Dampf geöffnet.

Sind die Formwerkzeuge zusammengefahren, wird der Schließmotor 106 abgeschaltet und die Injektoren 103a über Signal SI1, SI2 usw. betätigt sowie die Vakuumventile 66c, d durch Signale SV und die zugehörigen Ventile 65e, f geöffnet und mit dem Injektor und/oder dem Vakuum der Formhohlraum 200 mit Granulat gefüllt. Die Ventile 11/214 sind durch Betätiger 80 über Signale SB1, SB2 geschlossen, daß das Vakuum nicht in den Verteiler 69c übertreten kann, sondern nur im Formhohlraum 200 das Granulat ansaugt. Die Injektorluft wird statt zum Vakuum an die Außenluft abgeführt, wenn nur einfache Formverhältnisse vorliegen.

Jeweils nach ausreichender Füllung des Formhohlraumes 200 werden die einzelnen Injektoren 103a abgeschaltet. Nach Füllung aller Formhohlräume in den Formwerkzeugen wird das Vakuum zentral mit den Signalen SV und SPV abgeschaltet und die Verteiler 69d von der Zuführung 61c abgetrennt.

Für die Sinterung werden dann die Ventile 11/214 durch Abschaltung der Betätiger 80 durch Abschaltung der Signale SB1, SB2 usw. geöffnet, und der Dampf aus dem Verteiler 69c strömt über Verteiler 69d in den Formhohlraum 200 ein, und die Luft entweicht über Verteiler 169d zur Entsorgung V/E, so daß das Granulat dem Dampf ausgesetzt wird, bis jeweils der Druckmelder 55 einen Druckanstieg durch Signal MP1, MP2 usw. an die Steueranlage STA liefert, die jeweils das Ventil 11/214 durch den Betätiger 80 mit dem Signal SB1, SB2 usw. schließt.

Nach Abschluß des längsten Heizvorganges einer Gruppe von Formwerkzeugen an einer zentralen Ventilanordnung wird der Dampf an den Ventilen 67c, d mit Abschalten des Signals SD abgeschaltet und die Kühlung über die Ventile 68c, d durch Signale SK zugeschaltet. Sobald der längste Kühlvorgang beendet ist, wird die Kühlung abgeschaltet, und es kann der Dampf bereits wieder eingeschaltet werden. Die verschiedenen Gruppen der Formwerkzeuge werden jeweils individuell durch ihre zentralen Ventile dem Heiz- bzw. Kühlbedarf entsprechend gesteuert. Der Öffnungsmotor 106 wird nun über Signal SOM geöffnet und über die Ventile 65c, d und 65e, f durch Signale SP und SPV für eine kurze Zeit Druckluft über die Verteiler 69d, 169d in die Formhohlräume 200 zur Ausformung gedrückt.

Nach ausreichender Öffnung der Formwerkzeuge werden durch ein kurzzeitiges Signal SBA mit Betätigern 90 die Auswerfer in den Formhohlraum 200 geschoben und die Formlinge ausgestoßen, womit ein vollständiger Zyklus beendet ist.

Sofern die Ventile für Vakuum und Druckluft bzw. Dampf und Kühlung nicht gleichzeitig eingeschaltet sind, können diese Ventilpaare jeweils als ein umsteuerbares Ventil mit einer Betätigung und zwei Zuführungen ausgebildet sein.
Die Verwendung von Auswerfern jeweils nur bei einem der Teilwerkzeuge eines Formwerkzeuges kann dadurch erreicht werden, daß in der entsprechenden Formwand 21 eine Hinterschneidung 200a vorgesehen ist, die den Formling beim Öffnen der Teilwerkzeuge einseitig hält bis er von dem Auswerfer ausgestoßen wird.

Die angegebenen Zeitsteuerungen für das Heizen, Kühlen, Ausdrücken, Injizieren usw. können in bekannter Weise auch durch Regelungen mit Temperatur- und Drucksensoren ersetzt werden. Diese Sensoren werden dann jeweils an der Installation der Formwerkzeuge angeordnet und mit der Steueranlage verbunden, oder sie befinden sich in den Verteilern.

Sofern ein Formwerkzeug kein mit einem Auswerfer kombiniertes Ventil 11/214 enthält, wird der Dampf für die Sinterung über das Ventil 67a mit Signal SD1 über die Zuleitung 61d und die Ventile 65f mit Signal SPV1, 2 usw. zugeführt. Jeweils mit der Schließung des Ventils 11/214 wird dann gleichzeitig auch das Ventil 65f abgesperrt, und entsprechend werden die anderen Ventile SPV 2 usw. abgängig vom Sintervorgang geschlossen.

Die Zuführung weiterer Medien, z.B. von organischen Lösungsmitteldämpfen oder Farben zur Härtung und/oder Färbung der Oberfläche des Formlings und die Anwendung verschiedener Steuerungsabläufe, kann vorteilhaft in Verbindung mit der Vorrichtung und dem dargestellten Verfahren sehr einfach und mit geringem Aufwand durch zentralen Anschluß an die Installation auf den Montageschilden und, soweit erforderlich, durch Einzelsteuerung der Ventile an den Versorgeranschlüssen der Formwerkzeuge vorgenommen werden. Eine Einschränkung in den Funktionen ergibt sich durch den gleichzeitigen Fertigungsprozeß verschiedener Formlinge nicht.

Je nach den Erfordernissen des Formlinge wird, z. B. vor der Granulatzuführung, ein Farbnebel in den Formhohlraum eingeführt, der sich insbesondere bei noch kalter Formwand an dieser niederschlägt und einen gleichmäßigen dünnen Farbfilm bildet.

In einer anderen Ausgestaltung des Verfahrens wird während der Injektion des Granulate (G) die Farbe zugeführt. Dadurch wird eine Durchfärbung des Produktes erreicht.

In einer weiteren Verfahrensführung wird nach dem Sintern eine lokale Färbung, z. B. in Form von Symbol- oder Schriftzeichen oder eine Oberflächenhärtung einer oder beider Oberflächen oder bestimmter Abschnitte der Oberfläche des Formlings durch Beaufschlagung einer entsprechenden Düsenanordnung am Verteiler mit Farbe oder Lösungsmitteldampf vorgenommen. Hierdurch werden völlig neuartige Eigenschaften der Formlinge erreicht und eine Beschriftungsmöglichkeit integriert im Arbeitsgang geschaffen.

Während der Abkühlphase wird nach einer vorteilhaften Ausgestaltung des Verfahrens Druckluft mit einem Druck von z. B. 2 bar zur direkten Abkühlung des Formlinge über ein Reduzierventil R, den Verteiler und die Düsen dem Formling zugeführt. Diese Art der Kühlung wirkt schneller und energiesparender als die Kühlung über die Formwand mit ihrer hohen Wärmekapazität und dem schlechten Wärmeübergang über die Trennfläche. Zum Auswerfen wird der Druck der Druckluft auf z. B. 8 bar erhöht, indem das Reduzierventil R geöffnet wird.

Diese Verfahren sind für sich genommen eigenständige Erfindungen, die in Verbindung mit der Vorrichtung nach der Erfindung vorteilhaft mit geringem Aufwand durchgeführt werden können, denn die Steuerung der genannten Prozeßschritte erfolgt einerseits zentral und andererseits durch die vorgesehenen einzelnen Ventile an den Formwerkzeugen für jeden Formling den entsprechenden Anforderungen gemäß.

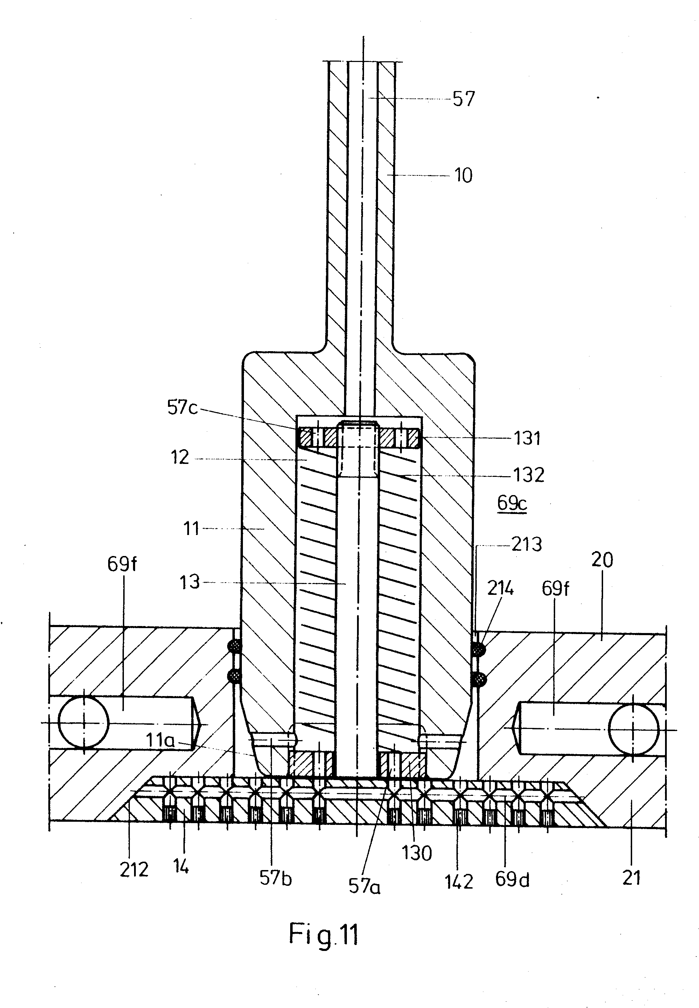

In Fig. 11 ist eine weitere Ausführungsform eines Auswerfers 10/14 mit integrierten Düsen 142 dargestellt, der für dicke und große Formlinge besonders vorteilhaft geeignet ist. Die Düsenplatte 14 ist dabei großflächig ausgeführt, und sie enthält den Verteiler 69d als Bohrungssystem selbst, von dem die Düsen 142 versorgt werden. Die Versorgung des Verteilers 69d kann hierbei entweder aus dem Verteiler 69c über das Ventil 11/214 oder durch die Innenbohrung 57 im Schaft 10 erfolgen, oder diese können zur Entsorgung dienen. Die Bohrungen 22 in der Formwand 20 sind als abgeschlossener Verteiler 69f zum Heizen oder Kühlen der Formwand 22 ausgebildet; sie werden unabhängig versorgt. Mit dieser Ausführung wird vorzugsweise die Formwand 20 durch den Verteiler 69f statt durch Verteiler 69c nur nach Bedarf geheizt, und die Kühlung wird kurzzeitig direkt über Innenbohrung 57, Verteiler 69d und Düsen 142 der Oberfläche des Formlings, z. B. mittels Kohlensäure, zugeführt. Auf diese Weise können extrem kurze Zykluszeiten und ein niedriger Energieverbrauch erreicht werden, da die Formwand nicht vollständig abgekühlt wird.

Die übrigen Funktionen entsprechen den bereits gezeigten.

0091970

- 27 -

Patentansprüche

1. Vorrichtung zur gleichzeitigen Sinterung insbesondere unterschiedlicher Formlinge aus schäumbarem Kunststoff, insbesondere Polystyrol, bestehend aus zwei Montageschilden (1,2), die austauschbare Formwerkzeuge (3,4) tragen, die jeweils einen Verteiler (69c, d) für Medien enthalten, die an eine Versorgereinrichtung angeschlossensind und/oder jeweils mindestens ein Betätigungsorgan (11,112) enthalten, das an eine Betätigereinrichtung (70,80) angeschlossen ist, dadurch gekennzeichnet, daß mindestens eines der Montageschilde (1,2) eine feste Installation der Versorgereinrichtung (61 bis 64a bis d; 65 bis 68a bis d; 103b) und/oder der Betätigereinrichtung (70,80,90,103a) mit jeweils mindestens einem Versorgeranschluß (69a, 100a) und/oder Betätigeranschluß (71a,81a) an auf dem Montageschild (1,2) in einem Raster angeordneten Montageplätzen für die Formwerkzeuge (3,4) trägt, und diese jeweils entsprechende Versorgungsanschlüsse (69b, 100b) und/oder Betätigungsanschlüsse (71b,81b) auf der dem Montageschild (1,2) zugewandten Seite tragen, an denen entsprechend jeweils die Verteiler (69c,d) und/oder das Betätigungsorgan (11,112) und/oder ein Injektorrohr (103) angeschlossen ist.

2. Vorrichtung nach Anspruch 1, dadurch gekennzeichnet, daß den Versorgeranschlüssen (69a, 100a) steuerbare Ventile (65a bis 68a) vorgeschaltet sind, die eingangsseitig jeweils mit einer Versorgerleitung (61a bis 64a) verbunden sind und/oder, daß ein Injektor (103a) eingangsseitig mit einer Versorgerleitung (103b) und ausgangsseitig dem Injektorrohr (103) verbunden ist.

3. Vorrichtung nach Anspruch 1 oder 2, dadurch gekennzeichnet, daß die Versorgeranschlüsse (69a,100a) und
die Versorgungsanschlüsse (69b,100b) mit Dichtungen
(100,202) jeweils verbunden sind und die Dichtungen
(100,202) vorzugsweise Ringdichtungen (100)
sind und/oder eine Dichtung (202) vorzugsweise aus
Kunststoff oder Gummi ist und sich vorzugsweise über
die gesamte Auflagefläche des Formwerkzeuges (3) auf
dem Montageschild (1) erstreckt.

4. Vorrichtung nach Anspruch 1, 2 oder 3, dadurch gekennzeichnet, daß der Betätigeranschluß (71a, 71b) mit
dem Betätigungsorgan (11) durch einen Schaft (10)
verbunden ist, der mit einer Dichtung (85a,b) in dem
Montageschild (2) oder der Wand des Formwerkzeuges (4),
die an dem Montageschild (2) befestigt ist, verschieblich gelagert ist.

5. Vorrichtung nach Anspruch 1 oder 4, dadurch gekennzeichnet, daß das Betätigungsorgan (11,112) mit einer
Dichtung (214,314,50) verschieblich in einer Formwand
(20) des Formwerkzeuges (4) gelagert ist und die Dichtung (214,314,50) die Verteilung (69c) gegen einen Formhohlraum (200) abdichtet.

6. Vorrichtung nach Anspruch 5, dadurch gekennzeichnet, daß die Formwand (20,21) von Bohrungen (22), die vorzugsweise mit dem Verteiler (69d) in Verbindung stehen, durchzogen ist, und die Bohrungen (22) einen gegen den Verteiler (69c) und den Formhohlraum (200) abgeschlossenen Verteiler (69f) bilden oder über Düsen (211) mit dem Formhohlraum (200) in Verbindung stehen und die Dichtung (214,314) die Verteilung (69c) gegen die Bohrungen (22) und/oder den Verteiler (69d) abdichtet, sofern das Betätigungsorgan (11,112) sich in der Dichtung (214,314) befindet.

7. Vorrichtung nach Anspruch 5, dadurch gekennzeichnet, daß das Betätigungsorgan (11,112) von der Stirnseite her mit einer zylindrischen Bohrung (12) versehen ist, in der ein Bolzen (13) durch eine Feder (132) kraftschlüssig eingezogen wird und die Feder (132) sich einerseits vorzugsweise auf einer Scheibe (130), die in die zylindrische Bohrung (12) eingeschraubt ist, abstützt und andererseits vorzugsweise auf eine Mutter (131) am Bolzen (13) drückt und daß an dem Bolzen (13) eine kegelförmige Platte (14) angesetzt ist, die Düsen (142) und/oder einen Temperatur- und/oder Drucksensor (55) trägt und sich mit ihren kegelförmigen Seitenflächen (141) in einem Kegelsitz (212) und vorzugsweise ihrer Deckfläche (141a) an einem ebenen Auflager (212a) in der Formwand (21) kraftschlüssig vorzugsweise so abstützt, daß die Basis des Kegels der Platte (14) bündig mit der Formwand (21) zum Formhohlraum (200) abschließt.

8. Vorrichtung nach Anspruch 7, dadurch gekennzeichnet, daß eine achsiale Bohrung (57a) durch den Schaft (10) verläuft, die als Versorgungsanschluß des Verteilers

(69d) dient und/oder durch die die Anschlußleitung (56) des Temperatur- und/oder Drucksensors (55) zur Installation auf den Montageschild (2) geführt ist und von dort aus mit einer Steueranlage (STA) verbunden ist.

9. Vorrichtung nach den Ansprüchen 1 oder 4 bis 8, dadurch gekennzeichnet, daß die Betätigervorrichtung (80,90) aus zwei hydraulischen oder pneumatischen Arbeitszylindern besteht, deren Arbeitswege additiv oder alternativ auf den Schaft (10) des Betätigungsorgans (11) einwirken und daß der Arbeitsweg des Zylinders (90) das Betätigungsorgan (11, 112) in die Dichtung (214,314) einschiebt und daß der Arbeitsweg des Zylinders (80) das Betätigungsorgan (11,112) zusammen mit der Platte (14) in den Formhohlraum (200) schiebt.

10. Vorrichtung nach Anspruch 1 oder 4 bis 8, dadurch gekennzeichnet, daß die Betätigungsvorrichtung (180,90) aus einem hydraulischen oder pneumatischen Arbeitszylinder (90), der einen ersten Arbeitsweg auf den Schaft (10) überträgt, und einem Anschlag (5), der vorzugsweise mit einer Schaftverlängerung (180) zusammenwirkt und der von einem Öffnungs-/Schließmotor (106) des Montageschildes (2) einen weiteren Arbeitsweg bei der Öffnung der Formwerkzeuge (3,4) additiv auf den Schaft (10) überträgt, besteht oder den Arbeitsweg alternativ auf den Schaft (10) überträgt.

0091970

- 31 -

11. Vorrichtung nach Anspruch 9 oder 10, dadurch gekennzeichnet, daß der Arbeitsweg des Zylinders (90) durch
einen Anschlag (82) derart begrenzt wird, daß das Betätigungsorgan (11,112) die Dichtung (214,314) schließt
und die Platte (14) nahezu berührt.

12. Vorrichtung nach einem der vorhergehenden Ansprüche,
dadurch gekennzeichnet, daß in einem Formwerkzeug (4)
mehrere Betätigungsorgane (11a,b) durch eine Betätigervorrichtung beaufschlagt werden und die Betätigungsorgane durch Parallelführungsmittel (801,802,803,300a,
300b) parallel in den Formhohlraum eintreten.

13. Vorrichtung nach einem der vorhergehenden Ansprüche,
dadurch gekennzeichnet, daß der Verteiler (69c) durch
thermische Isolierung (201a, 201b) vorzugsweise aus
Kunststoff oder Gummi in Richtung auf den Montageschild (1) bzw. nach außen isoliert ist.

14. Vorrichtung nach einem der vorhergehenden Ansprüche,
dadurch gekennzeichnet, daß ein Temperatur- und/oder
Drucksensor (400) an dem Kegelsitz (212) der Formwand
(21) angeordnet ist und sein Anschluß (402) vorzugsweise über Durchführungen (401,403) jeweils durch das
Formwerkzeug (4) und den Montageschild (2) zur Installation und von dort zur Steueranlage (STA) geführt ist.

15. Vorrichtung nach einem der vorhergehenden Ansprüche,
dadurch gekennzeichnet, daß zwischen den Teilwerkzeugen (4) und dem Montageschild (2) jeweils ein
Zwischenstück (4a) eingesetzt ist, durch das die Versorgeranschlüsse (69a,100a) und Betätigeranschlüsse
(71a,81a) und Befestigungen (101) hindurchgeführt sind
und parallel so verlagert sind, daß die Trennebenen
aller Teilwerkzeuge (3,4) in einer Ebene (6) liegen.

16. Vorrichtung nach einem der vorhergehenden Ansprüche,
dadurch gekennzeichnet, daß /das Formwerkzeug (3,4) aus
einer Verteilerkammer (3e,4e) und der Formwand (3f,4f)
besteht, die lösbar miteinander verbunden sind.

17. Vorrichtung nach Anspruch 16, dadurch gekennzeichnet,
daß die Verteilerkammer (3e) unlösbar mit dem Montageschild (1) verbunden ist bzw. einteilig mit dieser
ist.

18. Vorrichtung nach einem der vorhergehenden Ansprüche,
dadurch gekennzeichnet, daß die Versorgereinrichtungen
(65 bis 68 c bis f; 61, 63c und d) auf den Montageschilden (1,2) zentrale oder gruppenweise zentrale
Ventile (65 bis 68 c bis d) für die steuerbare Zuführung von Medien und daran ausgangsseitig angeschlossene Zuleitungen (61, 63c und d) enthält, wobei
mehrere zentrale Ventile (65d, 66d, 67e; 67d, 68d;
65c, 66c; 67c, 68c) jeweils mit einer Zuleitung (61c;
63c; 61d; 63d) zusammengeschlossen sind und diese Zuleitungen jeweils mit einem Versorgeranschluß jedes
Rasterplatzes verbunden sind und vorzugsweise für
jede Verteilereinrichtung (69, 169 c und d) eines
Formwerkzeuges jeweils ein Versorgeranschluß vorgesehen ist, und daß einzelne steuerbare Ventile (65e,f)
zwischen den Zuleitungen (61c,d) und den Versorgeranschlüssen der Verteiler (69, 169d), die durch Düsen
(211) mit dem Formhohlraum (200) in Verbindung stehen, angeordnet sind.

19. Vorrichtung nach einem der vorhergehenden Ansprüche, dadurch gekennzeichnet, daß alle Steuerleitungen der steuerbaren Ventile (65 bis 68a bis f) und der Betätiger (70,80,90) und des Öffnungs-/Schließmotors (106) mit der Steueranlage (STA) verbunden sind.

20. Verfahren zur Steuerung der Vorrichtung nach einem der Ansprüche 1 bis 19, dadurch gekennzeichnet, daß die Medien zum Heizen (D) und Kühlen (K) gruppenweise bzw. allen Verteilern (69c,169c) in Formwerkzeugen, die keine Verbindung zum Formhohlraum (200) haben, jeweils so lange pro Arbeitszyklus zugeführt werden, wie es gruppenweise der Formling mit dem längsten Zeitbedarf erfordert, und daß das Granulat (G) und das Medium zum Sintern (D) jeweils nur so lange den Verteilern (69d,169d) zugeführt wird, wie es für das Füllen bzw. Sintern des einzelnen Formhohlraumes bzw. Formlings erforderlich ist.

21. Verfahren nach Anspruch 20, dadurch gekennzeichnet, daß das Medium zum Sintern (D) jeweils nur so lange dem Formhohlraum (200) zugeführt wird, bis jeweils ein bestimmter Druckanstieg im Formhohlraum (200) und/oder Verteiler (69d,169d) auftritt und/oder die Medien zum Heizen und Kühlen nur so lange den Verteilern (69c, 169c) zugeführt werden, bis jeweils eine bestimmte Formwandtemperatur erreicht ist.

22. Verfahren nach Anspruch 19 und 20, dadurch gekennzeichnet, daß dem Formhohlraum (200) Kühlmedium von z. B. 2 bar am Ende des Sintervorganges zugeführt wird bis der Formling abgekühlt ist und anschließend Medium von z. B. 8 bar kurzzeitig zum Auswerfen zugeführt wird.

23. Verfahren zur Steuerung der Vorrichtung nach einem der vorhergehenden Ansprüche, dadurch gekennzeichnet, daß zur Härtung und/oder Färbung und/oder Kühlung des Formlings als Medium organische Lösungsmitteldämpfe und/oder Farbnebel oder -dämpfe (OF) kurzzeitig vor, während und/oder nach der Injektion von Granulat (G) und/oder nach dem Sintern dem Formhohlraum (200) über einen oder beide Verteiler (69d, 169d) zugeführt wird, wobei vorzugsweise die Zeitpunkte und die Zeitdauern der Zuführungen zu den Formhohlräumen (200) einer Vorrichtung den unterschiedlichen Erfordernissen der Formlinge entsprechend gesteuert wird.

24. Formling aus gesintertem Polystyrolschaumstoff hergestellt nach Anspruch 23, dadurch gekennzeichnet, daß er aus einem Sinterstoff besteht, der aus einem Gemisch von Granulat (G) mit Lösungsmittel- oder Farbnebel oder unter Einwirkung einer Farbdampf- oder Lösungsmitteldampfatmosphäre gesintert ist.

25. Formling aus gesintertem Polystyrolschaumstoff hergestellt nach Anspruch 23, dadurch gekennzeichnet, daß seine Oberfläche mindestens teilweise im Sinterprozeß durch Einwirkung von Lösungsmittel- und/oder Farbdampf und/oder -nebel angefärbt und/oder gehärtet ist.

0091970
1/8

Fig.1

Fig. 2

0091970

2/8

Fig.3

— 4 —

Fig.4

Fig.5

Fig.6

Fig.7

Fig.8

Fig.9

Fig.10

0091970
8/8

Fig.11